# FASCICULE DE BREVET EUROPEEN

(11) **EP 1 697 456 B1**
(45) Date de publication et mention de la délivrance du brevet: **27.08.2008**
(21) Numéro de dépôt: 04816416.4
(22) Date de dépôt: 17.12.2004
(51) Int. Cl.: C08K 5/5313, C08K 5/3492

(54) **COMPOSITION IGNIFUGEE A BASE DE MATRICE THERMOPLASTIQUE**
FLAMMFESTE ZUSAMMENSETZUNG AUF BASIS EINER THERMOPLASTISCHEN MATRIX
FIREPROOF COMPOSITION BASED ON THERMOPLASTIC MATRIX

(30) Priorité: 19.12.2003 FR 0314991; 09.01.2004 FR 0400180
(43) Date de publication de la demande: 06.09.2006
(73) Titulaire: Rhodia Engineering Plastics S.r.l., 20020 Ceriano Laghetto (IT)
(72) Inventeur: COUILLENS, Xavier, F-31170 TOURNEFEUILLE (FR); AMORESE, Michelangelo, I-20155 MILANO (IT)
(74) Mandataire: Valentino, Cédric
(86) Numéro de dépôt international: PCT/FR2004/003281
(87) Numéro de publication internationale: WO 2005/061606

(56) Documents cités:
- US-A- 5 985 960
- US-B1- 6 255 371
- US-B1- 6 642 288

## Description

La présente invention concerne une composition thermoplastique ignifugée comprenant un système d'ignifugation particulier à base de sel d'acide phosphinique et de dérivés de la mélamine. Cette composition est notamment utile pour la réalisation d'articles employés dans le domaine de la connectique électrique ou électronique.

Les compositions à base de résines thermoplastiques sont utilisées pour la réalisation d'articles par différents procédés de mise en forme. Ces articles sont utilisés dans de nombreux domaines techniques, tels que pour la réalisation de pièces de systèmes électriques ou électroniques. Ces pièces doivent présenter des propriétés mécaniques élevées mais également des propriétés de résistance chimique, d'isolation électrique, ainsi qu'une bonne ignifugation lorsque ces pièces rentrent en combustion. Un des aspects important est que ces pièces ne doivent pas rentrer en combustion, c'est à dire ne pas produire de flammes ; ou alors rentrer en combustion mais à des températures les plus élevée possible.

L'ignifugation des compositions à base de matrice thermoplastique a été étudiée depuis très longtemps. Ainsi, les ignifugeants principaux utilisés sont le phosphore rouge, les composés halogénés tels que les polybromodiphényles, les polybromodiphénoxydes, les polystyrènes bromés, des composés organiques azotés appartenant à la classe des triazines telles que la mélamine ou ses dérivés comme le cyanurate de mélamine et plus récemment les phosphates, polyphosphates et pyrophosphates de mélamine, les acides organo-phosphoreux et leurs sels.

On recherche de manière constante des agents ignifugeants ayant des propriétés d'ignifugation de plus en plus élevées. Par ailleurs, les ignifugeants, utilisés généralement dans des quantités importantes conduisent à des problèmes de mise en forme des pièces. De plus, certains ignifugeants contenant des halogènes ou du phosphore rouge peuvent générer des gaz ou vapeurs toxiques lors de la combustion de la composition polyamide. En outre, les ignifugeants sont connus pour être instables à des températures élevées. Ainsi, une partie des ignifugeants se dégrade lors du procédé de fabrication de l'article plastique, diminuant ainsi leur efficacité ignifugeante.

Il existe ainsi un besoin de compositions à base de matrice thermoplastique pour la réalisation d'articles ayant des propriétés mécaniques satisfaisantes et une bonne ignifugation, tout en évitant les inconvénients mentionnés précédemment.

La présente invention a pour premier objet une composition à base de matrice thermoplastique selon la revendication 1 comprenant un système d'ignifugation comprenant au moins :
- un composé (F1) de formule (I) : 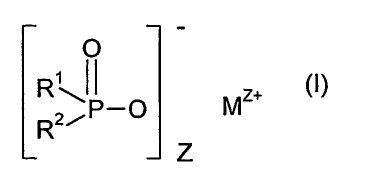 dans lequel :
   R¹ et R² sont identiques ou différents et représentent une chaîne alkyle linéaire ou branchée comprenant de 1 à 6 atomes de carbones, préférentiellement de 1 à 3 atomes de carbones, et/ou un radical aryle ;
   M représente un ion calcium, magnésium, aluminium et/ou zinc, préférentiellement un ion magnésium et/ou aluminium ;
   Z représente 2 ou 3, préférentiellement 3 ;
- un composé (F2) qui est un produit de réaction entre l'acide phosphorique et la mélamine et/ou un produit de réaction entre l'acide phosphorique et un dérivé de condensation de la mélamine ; et
- un composé (F3) qui est un dérivé de condensation de la mélamine ;
ladite composition comprend préférentiellement au moins 13 % en poids de composés F1 et F2, plus préférentiellement au moins 15 %, par rapport au poids total de la composition.

La demanderesse a découvert de manière tout à fait surprenante que les composés de ce système d'ignifugation particulier selon invention agissent en synergie dans la composition à base de matrice thermoplastique selon la revendication 1 et permettent d'obtenir des articles présentant outre une faible propagation des flammes, de bonnes propriétés mécaniques et une bonne stabilité thermique, une capacité élevée à ne pas générer de flammes, lorsqu'ils entrent en contact avec des corps incandescents ou propageant des flammes.

La composition selon l'invention peut comprendre de 1 à 50 % en poids du système d'ignifugation selon l'invention comprenant au moins les composés F1, F2 et F3, préférentiellement de 5 à 40 %, encore plus préférentiellement de 10 à 30 %, particulièrement de 15 à 30 %, par rapport au poids total de la composition.

La composition selon l'invention peut comprendre de 1 à 30 % en poids de composé F1, préférentiellement de 1 à 20 % en poids, plus préférentiellement de 5 à 15 % en poids.

La composition selon l'invention peut comprendre de 1 à 20 % en poids de composé F2, préférentiellement de 2 à 10 % en poids.

La composition selon l'invention peut comprendre de 0,1 à 20 % en poids de composé F3, préférentiellement de 1 à 10 % en poids.

Préférentiellement, le rapport en poids des composés F1 et F2 est respectivement compris entre 1 :1 et 4 :1, préférentiellement aux environs de 2:1 et 3:2.

R¹ et R² du composé F1 de formule (I) peuvent être identiques ou différents et représenter un méthyle, éthyle, n-propyl, isopropyl, n-butyl, ter-butyl, n-pentyl et/ou aryle tel qu'un phényle par exemple. M est préférentiellement un ion aluminium. L'acide phosphinique du composé F1 peut être choisi par exemple parmi le groupe comprenant : l'acide diméthyl phosphinique, l'acide éthylméthyl phosphinique, l'acide diéthyl phosphinique, l'acide méthyl-n-propyl phosphinique, et/ou leur mélange. Différents acides phosphiniques peuvent être utilisés en combinaison. Les composés F1 sont notamment décrits dans le brevet US6255371.

Les sels d'acide phosphinique selon l'invention peuvent être préparés selon les méthodes usuelles bien connues de l'homme du métier, telle que par exemple celle décrite dans le brevet EP 0699708. Les sels d'acide phosphinique selon l'invention peuvent être utilisés sous différentes formes dépendantes de la nature du polymère et des propriétés désirées. Par exemple, pour obtenir une bonne dispersion dans le polymère, un sel d'acide phosphinique peut être sous forme de fines particules.

Le composé F2 est un produit de réaction entre l'acide phosphorique et la mélamine et/ou un produit de réaction entre l'acide phosphorique et un dérivé de condensation de la mélamine. Différents composés F2 peuvent être utilisés en combinaison. Les dérivés condensés de la mélamine sont par exemple le mélam, le mélem et le mélon. On peut également utiliser des composés encore plus condensés. Préférentiellement, le composé F2 peut être choisi par exemple parmi le groupe comprenant les produits de réaction suivants : polyphosphate de mélamine, polyphosphate de mélam, et polyphosphate de mélem, et/ou leur mélange. Il est particulièrement préférable d'utiliser un polyphosphate de mélamine ayant des chaînes d'une longueur supérieure à 2, et en particulier supérieure à 10. Ces composés sont notamment décrit dans le brevet WO9839306 et US6255371. Les composés F2 peuvent être également obtenus par des procédés autres que ceux basés sur la réaction directe avec un acide phosphorique. Par exemple, le polyphosphate de mélamine peut être préparé par réaction de la mélamine avec de l'acide polyphosphorique (voir WO9845364), mais également par condensation du phosphate de mélamine et du pyrophosphate de mélamine (voir WO9808898).

Le composé F3 est un dérivé de condensation de la mélamine, tel que par exemple le mélam, le mélem, le mélon et/ou menthone. On peut également utiliser des composés encore plus condensés. Différents composés F3 peuvent être utilisés en combinaison. Préférentiellement, on utilise le mélem qui est un composé de formule C₆H₆N₁₀, que l'on peut représenter avec la formule suivante :

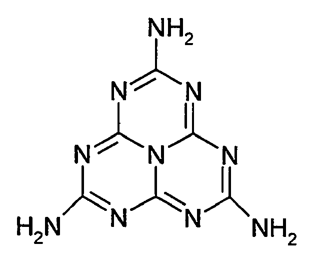

D'une manière tout à fait préférentielle, le système d'ignifugation de la présente invention comprend un composé F1 de formule (I) dans lequel R₁=R₂=éthyle, M = aluminium et Z=3 ; un composé F2 : polyphosphate de mélamine ; et un composé F3 qui est du mélem. Le rapport en poids des composés F1 et F2 peut être par exemple respectivement de 2 :1.

La présente invention concerne une composition à base de matrice thermoplastique choisie dans le groupe comprenant les (co)polyamides selon la revendication 1.

On peut citer, par exemple, les polyamides semi-cristallins ou amorphes linéaires, tels que les polyamides aliphatiques, polyamides semi-aromatiques et plus généralement, les polyamides obtenus par polycondensation entre un diacide saturé aliphatique ou aromatique, et une diamine primaire saturée aromatique ou aliphatique, les polyamides obtenus par condensation d'un lactame et/ou d'un aminoacide, ou les polyamides obtenus par condensation d'un mélange de ces différents monomères. Ces copolyamides peuvent être, par exemple, le polyadipamide d'hexaméthylène, les polyphtalamides obtenus à partir d'acide téréphtalique et/ou isophtalique, les copolyamides obtenus à partir de caprolactame, et d'un ou plusieurs monomères généralement utilisés pour la fabrication des polyamides, tel que l'acide adipique, l'acide téréphtalique, et/ou l'hexaméthylène diamine.

Le polyamide est de préférence choisi parmi les polyamides semi-cristallins par exemple, les polymères obtenus par action de polycondensation de diacides carboxyliques aliphatiques saturés ayant de 6 à 12 atomes de carbone tels que, par exemple l'acide adipique, acide azélaïque, acide sébacique, acide dodécanoïque ou un mélange de ceux-ci avec des diamines biprimaires de préférence aliphatiques saturées linéaires ou ramifiées ayant de 4 à 12 atomes de carbone telles que, par exemple l'hexaméthylène diamine, la triméthylhexaméthylène diamine, la tétraméthylène diamine, la m-xylène diamine ou un mélange de celles-ci; les polyamides obtenus soit par homopolycondensation directe d'acide ω-aminoalcanoïque comportant une chaîne hydrocarbonée ayant de 4 à 12 atomes de carbone, soit par ouverture hydrolytique et polymérisation des lactames dérivés de ces acides ; les copolyamides obtenus à partir des monomères de départ des polyamides précités, le composant acide de ces copolyamides pouvant consister en outre en partie en acide téréphtalique et/ou en acide isophtalique ; et les mélanges de ces polyamides ou leurs copolymères.

A titre d'illustration des polyamides obtenus par polycondensation de diacides et de diamines, on citera par exemple: le polyamide 4,6 (polymère de tétraméthylènediamine et d'acide adipique), le polyamide 6,6 (polymère d'hexaméthylènediamine et d'acide adipique), le polyamide 6,9 (polymère d'hexaméthylènediamine et d'acide azélaïque), le polyamide 6,10 (polymère d'hexaméthylènediamine et d'acide sébacique), le polyamide 6,12 (polymère d'hexaméthylènediamine et d'acide dodécanedioïque).

A titre d'illustration des polyamides obtenus par homopolycondensation qui peuvent convenir, on citera : le polyamide 4 (polymère d'acide amino-4 butanoïque ou de γ-butyrolactame), le polyamide 5 (polymère d'acide amino-5 pentanoïque ou de δ-amylolactame), le polyamide 6 (polymère d'ε-caprolactame), le polyamide 7 (polymère d'acide amino-7 heptanoïque), le polyamide 8 (polymère de capryllactame), le polyamide 9 (polymère d'acide amino-9 nonanoïque), le polyamide 10 (polymère d'acide amino-10 décanoïque), le polyamide 11 (polymère d'acide amino-11 undécanoïque), le polyamide 12 (polymère d'acide amino-12 dodécanoïque ou de laurylactame).

A titre d'illustration des copolyamides, on citera par exemple : le polyamide 6,6/6,10 (copolymère d'hexaméthylènediamine, d'acide adipique et d'acide sébacique), le polyamide 6,6/6 (copolymère d'hexaméthylènediamine, d'acide adipique et de caprolactame), le polyamide 6/12, le polyamide 6/11, le polyamide 6/6,36.

On peut également citer le polyamide 6(T) qui est un polyamide obtenu par polycondensation d'acide téréphtalique et d'hexaméthylène diamine ; le polyamide 9(T) qui est un polyamide obtenu par polycondensation d'acide téréphtalique et d'une diamine comprenant 9 atomes de carbone ; le polyamide 6(I) qui est un polyamide obtenu par polycondensation d'acide isophtalique et d'hexaméthylène diamine ; et le polyamide MXD6 qui est un polyamide obtenu par polycondensation d'acide adipique et de métaxylylène diamine.

La matrice (co)polyamide selon l'invention comprend au moins un (co)polyamide choisi dans le groupe comprenant : le (co)polyamide 6 ; 4 ; 11 ; 12, 4.6 ; 6.6 ; 6.9 ; 6.10 ; 6.12 ; 6.18 ; 6.36 ; 6(T) ; 9(T) ; 6(I) ; MXD6 ; leurs copolymères et/ou mélanges.

La composition selon l'invention peut également comprendre des charges de renfort bien connues de l'homme du métier et choisies par exemple dans le groupe comprenant des fibres de verre, de carbone, minérales, céramiques, organiques thermorésistantes comme les fibres en polyphthalamide, et des charges minérales telles que la wollastonite, le kaolin, l'argile, la silice et le mica, et des nanocharges minérales telles que la montmorillonite et l'α-ZrP ; et/ou leurs mélanges. Les fibres de verre sont particulièrement préférées selon l'invention. Les fibres de verre préférentiellement utilisées sont des fibres de verre pour polyamide, ayant, par exemple, un diamètre moyen compris entre 5 et 20 µm, préférentiellement entre 10 et 14 µm, telles que par exemple les fibres de verre CS123D-10C (Owens Corning Fibreglass), CS1103 (Owens Corning Fibreglass) et CS983 (Vetrotex) et CS99B (Vetrotex). Les charges de renfort peuvent représenter de 0 à 80 %, préférentiellement de 5 à 55 %, encore plus préférentiellement de 10 à 40 % en poids par rapport au poids total de la composition.

La composition selon l'invention peut également comprendre un ou plusieurs additifs habituellement utilisés par un homme du métier dans les compositions utilisées pour la fabrication d'articles moulés. Ainsi, on peut citer à titre d'exemple d'additifs les stabilisants thermiques, les agents de moulage tels que le calcium stéarate, les stabilisants UV, les antioxydants, les lubrifiants, les réducteurs d'abrasion, les pigments, colorants, plastifiants, les promoteurs de marquage au laser ou des agents modifiant la résilience. A titre d'exemple, les antioxydants et stabilisants chaleur sont, par exemple, des halogénures d'alcalins, des halogénures de cuivre, les composés phénoliques stériquement encombrés, les phosphites organiques et les amines aromatiques.

La composition selon l'invention peut également comprendre en outre différents autres composés ignifugeants ou agents synergiques au système d'ignifugation, tel que des stabilisants thermiques. On peut citer, par exemple, la poudre de céramique, l'hydroxyde de magnésium, les hydrotalcites, les carbonates de magnésium et les autres carbonates alcalino-terreux, l'oxyde de zinc, le stannate de zinc, l'hydroxystannate de zinc, le phosphate de zinc, le borate de zinc, le sulfide de zinc, l'hydroxyde d'aluminium, le phosphate d'aluminium et le phosphore rouge, les composés organiques azotés appartenant à la classe des triazines telles que la mélamine et/ou ses dérivés comme le cyanurate de mélamine. Les composé à base de zinc, tel que le borate de zinc, peuvent être présent dans des proportions comprises entre 0,01 et 5 % en poids, préférentiellement entre 0,1 et 5 % en poids, par rapport au poids total de la composition.

La présente invention concerne également un procédé de fabrication d'une composition ignifugée selon l'invention dans lequel on mélange, par exemple à l'extrusion en voie fondue ou à sec, au moins une matrice thermoplastique selon la revendication 1 et au moins un système d'ignifugation tels que décrit précédemment.

Le mélange peut être effectué à l'état fondu par exemple dans une extrudeuse mono ou bivis, ou par mélange sans passer à l'état fondu, par exemple dans un mélangeur mécanique. Les composés peuvent être introduits simultanément ou successivement. Tous les moyens connus de l'homme du métier concernant l'introduction des différents composés d'une composition thermoplastique peuvent être utilisés. On utilise généralement un dispositif d'extrusion dans lequel la matière est chauffée, soumise à une force de cisaillement, et véhiculée. De tels dispositifs sont parfaitement connus de l'homme du métier. La composition selon l'invention, lorsqu'elle est préparée à l'aide d'un dispositif d'extrusion peut être conditionnée sous forme de granulés ou utilisée directement pour la mise en forme d'un article.

La présente invention concerne aussi un article obtenu par mise en forme d'une composition selon l'invention notamment par un procédé choisi dans le groupe comprenant un procédé d'extrusion, tel que l'extrusion de feuilles et de films, de moulage, tel que le moulage par compression, d'injection, tel que le moulage par injection, et de filage. De tels articles peuvent être utilisés dans le domaine de l'automobile, de la connectique électrique ou électronique tels que des éléments de disjoncteurs, interrupteurs, connecteurs ou analogues.

D'autres détails ou avantages de l'invention apparaîtront plus clairement au vu des exemples donnés ci-dessous uniquement à titre indicatif.

Les composés utilisés dans les exemples ci-dessous sont les suivants :
- PA 66 : PA 66 ayant un indice de viscosité de 140 ml/g (ISO 307, acide formique), et un Mn de 17600 g/mol (mesurée par GPC) ;
- Composé F1 de formule (VI) dans lequel R₆=R₇=éthyle, M=aluminium et Z=3 ;
- Composé F2 : polyphosphate de mélamine.
- Composé F3 : mélem (2,6,10-triamine symmetric-heptazine) Delacal^{®} 450 (Delamin) ;
- FV : Fibres de verre CS99B (Vetrotex) ;
- SC : Stéarate de calcium.
- BZ : Borate de zinc : Firebrake^{®} ZB (US Borax)

### Exemple 1 : Fabrication de compositions

Les compositions sont préparées par mélange des composants dans des proportions indiquées dans le tableau 1 de l'exemple 2, sur une extrudeuse double-vis Werner & Pfleiderer ZSK 40, ayant une vitesse de vis de 200 rpm et une sortie de 35 kg/h, à une température de 270°C. Les fibres de verre sont ajoutées au mélange à la gorge de l'extrudeuse. Les granulés sont séchés et fondus sur une machine de moulage par injection Arburg 320 M500-210 à une température de 270-280°C et ensuite moulés à 80-90°C, sous forme d'éprouvettes.

Les compositions finales comprennent 30 % de fibres de verre et 0,5 % de stéarate de calcium.

### Exemple 2 : Mesure des propriétés

Les propriétés sont déterminées sur des éprouvettes, selon les méthodes suivantes :
- La résistance à la flamme est mesurée selon le test UL-94 ("Underwriters Laboratories"). Ce test est réalisé avec des éprouvettes d'épaisseur de 0,8 mm, après conditionnement de 48 heures à 50 % RH (humidité relative) et 168 heures à 70°C. Le résultat est codifié comme suit : N.C : non classé (ignifugation faible). V-2 : le temps moyen de combustion est inférieur à 25 secondes, le temps de combustion maximum est inférieur à 30 secondes (auto-extinction) ; goutte de polyamide enflammant le coton. V-1 : temps moyen de combustion est inférieur à 25 secondes, le temps de combustion maximum est inférieur à 30 secondes (auto-extinction) ; pas d'inflammation du coton par la goutte. V-0 : temps moyen de combustion est inférieur à 5 secondes, le temps de combustion maximum est inférieur à 10 secondes (auto-extinction) ; pas d'inflammation du coton.
- GWFT : On mesure la capacité à l'extinction d'une flamme provoquée par l'application d'un fil incandescent selon la norme IEC 60695-2-12 sur des éprouvettes d'épaisseur de 1,0 mm et de surface 80*80 mm, à une température de 960°C. On note que la composition passe avec succès le test lorsqu'il y a inflammation durant l'application du fil incandescent mais auto-extinction dans les 30 secondes après enlèvement dudit fil incandescent. On note que la composition échoue au test lorsqu'il y a inflammation durant l'application du fil incandescent et pas d'auto-extinction dans les 30 secondes après enlèvement dudit fil incandescent. Le test est passé avec succès lorsque les trois éprouvettes différentes confirment successivement la même température.
- GWIT : On mesure la capacité à ne pas former une flamme suite à l'application d'un fil incandescent selon la norme IEC 60695-2-13 sur des éprouvettes d'épaisseur de 1,0 mm, à une température de 750°C. La norme prévoit que lorsque l'échantillon passe avec succès le test à 750°C, est additionné 25°C à cette température, et l'échantillon est par conséquent classifié avec un GWIT de 775°C. On note que la composition passe avec succès le test lorsqu'il n'y a pas d'inflammation durant l'application du fil incandescent. On note que la composition échoue au test lorsqu'il y a inflammation durant l'application du fil incandescent, c'est à dire production de flammes ayant une permanence de plus de 5 secondes. Le test est passé avec succès lorsque les trois éprouvettes différentes confirment successivement la même température.
- Résistance aux chocs CHARPY selon les normes ISO 179\1eA et ISO 179\1eU.
- CTI : selon la norme IEC 112. La résistance CTI est le voltage pour lequel un matériel ne subit pas de flammes au niveau de sa superficie. Pour ce test, on vient appliquer 50 fois, et ce toutes les trente secondes, des courants en même point, par l'intermédiaire d'une solution saline de chlorure d'ammonium qui chute au sein d'un intervalle fixe entre deux électrodes. S'il n'advient pas de flammes et ce jusqu'au terme des 50 applications, le test est passé avec succès.

Les propriétés des compositions réalisées précédemment sont rassemblées dans le tableau 1 (les pourcentages sont exprimés en poids).

**Tableau 1**

| | **A** | **1** | **2** | **3** | **4** |
|---|---|---|---|---|---|
| PA 66 (%) | 51,5 | 46,5 | 50 | 47 | 46,5 |
| F1 (%) | 11,5 | 11,5 | 12,5 | 10 | 12 |
| F2 (%) | 6 | 6 | 6,5 | 5 | 6 |
| F3 (%) | 0 | 5 | 1 | 7 | 5 |
| BZ (%) | 0,5 | 0,5 | 0,5 | 0,5 | 0 |
| GWIT (775°C) | échec | passe | passe | passe | passe |
| GWFT (960°C) | passe | passe | passe | passe | passe |
| UL 94 | V-0 | V-0 | V-0 | V-0 | V-0 |
| CHARPY (KJ/m²) | 59,6 | 49,9 | 53,3 | 49,1 | 56,5 |
| CTI (volt) | 600 | 600 | 600 | 575 | - |

Les compositions selon l'invention permettent d'obtenir des articles ayant un comportement mécanique très satisfaisant ainsi qu'une faible inflammation et une bonne ignifugation, par rapport aux articles obtenus à partir de compositions de l'art antérieur ne comprenant pas de mélem.

## Revendications

1. Composition à base de matrice thermoplastique comprenant un système d'ignifugation comprenant au moins :
- un composé (F1) de formule (I) : 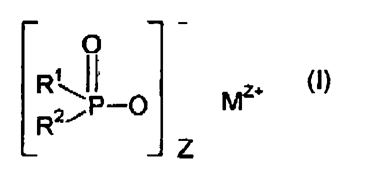 dans lequel :
R¹ et R² sont identiques ou différents et représentent une chaîne alkyle linéaire ou branchée comprenant de 1 à 6 atomes de carbones, et/ou un radical aryle ; M représente un ion calcium, magnésium, aluminium et/ou zinc ; Z représente 2 ou 3;
- un composé (F2) qui est un produit de réaction entre l'acide phosphorique et la mélamine et/ou un produit de réaction entre l'acide phosphorique et un dérivé de condensation de la mélamine ; et
- un composé (F3) qui est un dérivé de condensation de la mélamine ;
ladite composition comprenant au moins 13 % en poids de composés F1 et F2, préférentiellement au moins 15 %, par rapport au poids total de la composition ;
la matrice thermoplastique est une matrice (co)polyamide comprenant au moins un (co)polyamide choisi dans le groupe comprenant : le (co)polyamide 6 ; 4 ; 11 ; 12, 4.6 ; 6.6 ; 6.9 ; 8.10 ; 6.12 ; 6.18 ; 6.36. ; 6(T) ; 9(T) ; 6(I) ; MXD6 ; leurs copolymères et/ou mélanges.

2. Composition selon la revendication 1, **caractérisée en ce qu'**elle comprend de 1 à 50 % en poids du système d'ignifugation comprenant au moins les composés F1, F2 et F3, par rapport au poids total de la composition.

3. Composition selon la revendication 1 à 2, **caractérisée en ce qu'**elle comprend de 1 à 30 % en poids de composé F1.

4. Composition selon l'une quelconque des revendications 1 à 3, **caractérisée en ce qu'**elle comprend de 1 à 20 % en poids de composé F2.

5. Composition selon l'une quelconque des revendications 1 à 3, **caractérisée en ce qu'**elle comprend de 0,1 à 20 % en poids de composé F3.

6. Composition selon l'une quelconque des revendications 1 à 7, **caractérisée en ce que** l'acide phosphinique du composé F1 est choisi parmi le groupe comprenant : l'acide diméthyl phosphinique, l'acide éthylméthyl phosphinique, l'acide diéthyl phosphinique et l'acide méthyl-n-propyl phosphinique, et/ou leur mélange.

7. Composition selon l'une quelconque des revendications 1 à 6, **caractérisée en ce que** le composé F2 est choisi parmi le groupe comprenant : le polyphosphate de mélamine, polyphosphate de mélam, et polyphosphate de mélem, et/ou leur mélange.

8. Composition selon l'une quelconque des revendications 1 à 7, **caractérisée en ce que** le composé F3 est choisi parmi le groupe comprenant : le mélam, le mélem, le mélon, et/ou leur mélange.

9. Composition selon l'une quelconque des revendications 1 à 9, **caractérisée en ce que** ladite composition comprend des charges de renfort choisies parmi le groupe comprenant: des fibres de verre, des fibres de carbone, des fibres minérales, des fibres céramiques, des fibres organiques thermorésistantes ; des charges minérales telles que la wollastonite, le kaolin, l'argile, la silice et le mica, et des nanocharges minérales telles que la montmorillonite et l'α-Zr phosphate, et/ou leurs mélanges.

10. Composition selon l'une quelconque des revendications 1 à 9, **caractérisé en ce que** ladite composition comprend des agents ignifugeants ou des agents synergiques au système d'ignifugation choisis parmi le groupe comprenant : la poudre de céramique, l'hydroxyde de magnésium, les hydrotalcites, les carbonates de magnésium et les autres carbonates alcalino-terreux, l'oxyde de zinc, le stannate de zinc l'hydroxystannate de zinc, le phosphate de zinc, le borate de zinc, le sulfure de zinc, l'hydroxyde d'aluminium, le phosphate d'aluminium et le phosphore rouge, les composés organiques azotés appartenant à la classe des triazines telles que la mélamine et/ou ses dérivés comme le cyanurate de mélamine.

11. Procédé de fabrication d'une composition selon l'une quelconque des revendications 1 à 10, dans lequel on mélange au moins la matrice thermoplastique avec le système d`ignifugation comprenant au moins les composés F1, F2 et F3.

12. Article obtenu par mise en forme d'une composition selon l'une quelconque des revendications 1 à 10.

## Claims

1. Composition based on a thermoplastic matrix comprising a flame-retardant system comprising at least:
- one compound (F1) of formula (I): 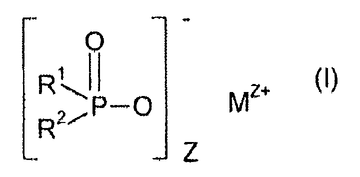 in which:
R¹ and R² are identical or different and represent a linear or branched alkyl chain comprising from 1 to 6 carbon atoms and/or an aryl radical; M represents a calcium, magnesium, aluminum and/or zinc ion; Z represents 2 or 3;
- one compound (F2) which is a reaction product between phosphoric acid and melamine and/or a reaction product between phosphoric acid and a melamine condensation derivative; and
- one compound (F3) which is a melamine condensation derivative;
said composition comprising at least 13% by weight of compounds F1 and F2, preferably at least 15%, with respect to the total weight of the composition;
the thermoplastic matrix is a (co)polyamide matrix comprising at least one (co)polyamide chosen from the group consisting of (co)polyamide 6; 4; 11; 12, 4.6; 6.6; 6.9; 6.10; 6.12; 6.18; 6.36; 6(T); 9(T); 6(I) ; MXD6; their copolymers and/or blends.

2. Composition according to Claim 1, **characterized in that** it comprises from 1 to 50% by weight of the flame-retardant system comprising at least the compounds F1, F2 and F3, with respect to the total weight of the composition.

3. Composition according to Claim 1 or 2, **characterized in that** it comprises from 1 to 30% by weight of compound F1.

4. Composition according to any one of Claims 1 to 3, **characterized in that** it comprises from 1 to 20% by weight of compound F2.

5. Composition according to any one of Claims 1 to 3, **characterized in that** it comprises from 0.1 to 20% by weight of compound F3.

6. Composition according to any one of Claims 1 to 7, **characterized in that** the phosphinic acid of the compound F1 is chosen from the group consisting of dimethylphosphinic acid, ethylmethylphosphinic acid, diethylphosphinic acid, methyl(n-propyl)phosphinic acid and their mixture.

7. Composition according to any one of Claims 1 to 6, **characterized in that** the compound F2 is chosen from the group consisting of melamine polyphosphate, melam polyphosphate, melem polyphosphate and their mixture.

8. Composition according to any one of Claims 1 to 7, **characterized in that** the compound F3 is chosen from the group consisting of melam, melem, melon and their mixture.

9. Composition according to any one of Claims 1 to 9, **characterized in that** said composition comprises reinforcing fillers chosen from the group consisting of glass fibers, carbon fibers, inorganic fibers, ceramic fibers, heat-resistant organic fibers; inorganic fillers, such as wollastonite, kaolin, clay, silica and mica, and inorganic nanofillers, such as montmorillonite and α-Zr phosphate, and their mixtures.

10. Composition according to any one of Claims 1 to 9, **characterized in that** said composition comprises flame-retardant agents or agents which are synergistic with the flame-retardant system chosen from the group consisting of ceramic powder, magnesium hydroxide, hydrotalcites, magnesium carbonates and the other alkaline earth metal carbonates, zinc oxide, zinc stannate, zinc hydroxystannate, zinc phosphate, zinc borate, zinc sulfide, aluminum hydroxide, aluminum phosphate and red phosphorus, nitrogenous organic compounds belonging to the class of the triazines, such as melamine and/or its derivatives, such as melamine cyanurate.

11. Process for the manufacture of a composition according to any one of Claims 1 to 10, in which at least the thermoplastic matrix is blended with the flame-retardant system comprising at least the compounds F1, F2 and F3.

12. Article obtained by forming a composition according to any one of Claims 1 to 10.

## Patentansprüche

1. Zusammensetzung auf Basis einer thermoplastischen Matrix mit einem Flammschutzsystem, das
- eine Verbindung (F1) der Formel (I): 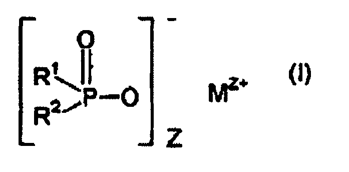 worin:
R¹ und R² gleich oder verschieden sind und für eine lineare oder verzweigte Alkylkette mit 1 bis 6 Kohlenstoffatomen und/oder einen Arylrest stehen; M für ein Calcium-, Magnesium-, Aluminium-und/oder Zinkion steht; Z für 2 oder 3 steht;
- eine Verbindung (F2), bei der es sich um ein Produkt der Umsetzung von Phosphorsäure mit Melamin und/oder ein Produkt der Umsetzung von Phosphorsäure mit einem Melaminkondensationsderivat handelt; und
- eine Verbindung (F3), bei der es sich um ein Melaminkondensationsderivat handelt; enthält;
wobei die Zusammensetzung mindestens 13 Gew.-% der Verbindungen F1 und F2, vorzugsweise mindestens 15%, bezogen auf das Gesamtgewicht der Zusammensetzung, enthält;
wobei es sich bei der thermoplastischen Matrix um eine (Co)polyamidmatrix handelt, die mindestens ein (Co)polyamid aus der Gruppe (Co)polyamid 6; 4; 11; 12; 4,6; 6,6; 6,9; 6,10; 6,12; 6,18; 6,36; 6(T); 9(T); 6(I); MXD6; Copolymere und/oder Mischungen davon enthält.

2. Zusammensetzung nach Anspruch 1, **dadurch gekennzeichnet, daß** sie 1 bis 50 Gew.-% des mindestens die Verbindungen F1, F2 und F3 enthaltenden Flammschutzsystems, bezogen auf das Gesamtgewicht der Zusammensetzung, enthält.

3. Zusammensetzung nach Anspruch 1 bis 2, **dadurch gekennzeichnet, daß** sie 1 bis 30 Gew.-% der Verbindung F1 enthält.

4. Zusammensetzung nach einem der Ansprüche 1 bis 3, **dadurch gekennzeichnet, daß** sie 1 bis 20 Gew.-% der Verbindung F2 enthält.

5. Zusammensetzung nach einem der Ansprüche 1 bis 3, **dadurch gekennzeichnet, daß** sie 0,1 bis 20 Gew.-% der Verbindung F3 enthält.

6. Zusammensetzung nach einem der Ansprüche 1 bis 7, **dadurch gekennzeichnet, daß** die Phosphinsäure der Verbindung F1 aus der Gruppe Dimethylphosphinsäure, Ethylmethylphosphinsäure, Diethylphosphinsäure und Methyl-n-propylphosphinsäure und/oder einer Mischung davon ausgewählt ist.

7. Zusammensetzung nach einem der Ansprüche 1 bis 6, **dadurch gekennzeichnet, daß** die Verbindung F2 aus der Gruppe Melaminpolyphosphat, Melampolyphosphat, Melempolyphosphat und/oder einer Mischung davon ausgewählt ist.

8. Zusammensetzung nach einem der Ansprüche 1 bis 7, **dadurch gekennzeichnet, daß** die Verbindung F3 aus der Gruppe Melam, Melem, Melon und/oder einer Mischung davon ausgewählt ist.

9. Zusammensetzung nach einem der Ansprüche 1 bis 9, **dadurch gekennzeichnet, daß** sie Verstärkungsfasern aus der Gruppe Glasfasern, Kohlefasern, Mineralfasern, Keramikfasern, hitzebeständige organische Fasern, mineralische Füllstoffe wie Wollastonit, Kaolin, Ton, Siliciumdioxid und Glimmer und minderalische Nanofüllstoffe wie Montmorillonit und α-Zr-Phosphat und/oder Mischungen davon enthält.

10. Zusammensetzung nach einem der Ansprüche 1 bis 9, **dadurch gekennzeichnet, daß** sie Flammschutzmittel oder mit dem Flammschutzsystem synergistische Mittel aus der Gruppe Keramikpulver, Magnesiumhydroxid, Hydrotalcite, Magnesiumcarbonate und die anderen Erdalkalimetallcarbonate, Zinkoxid, Zinkstannat, Zinkhydroxystannat, Zinkphosphat, Zinkborat, Zinksulfid, Aluminiumhydroxid, Aluminiumphosphat und roter Phosphor, stickstoffhaltige organische Verbindungen aus der Klasse der Triazine wie Melamin und/oder Derivate davon wie Melamincyanurat enthält.

11. Verfahren zur Herstellung einer Zusammensetzung nach einem der Ansprüche 1 bis 10, bei dem man mindestens die thermoplastische Matrix mit dem mindestens die Verbindungen F1, F2 und F3 enthaltenden Flammschutzsystem vermischt.

12. Gegenstand, erhalten durch Formen einer Zusammensetzung nach einem der Ansprüche 1 bis 10.
